# EUROPEAN PATENT APPLICATION

(11) **EP 4 597 850 A1**
(43) Date of publication of application: **06.08.2025**
(21) Application number: 24155015.1
(22) Date of filing: 31.01.2024
(51) Int. Cl.: H04B 1/40, H01Q 25/00, G01S 13/00, H04B 7/06

(54) **BISTATIC ANTENNA DEVICE**

(71) Applicant: Turck Holding GmbH, 58553 Halver (DE)
(72) Inventor: Väänänen, Ismo, 02770 Espoo (FI)
(74) Representative: DTS Patent- und Rechtsanwälte PartmbB

(57) **Abstract**

The present invention relates to a bistatic antenna device (100), comprising:
- a control unit (102);
- a transmitter unit (104);
- a receiver unit (106);
- a transmitting antenna array (108); and
- a receiving antenna array (110);

wherein the transmitting antenna array (108) and the receiving antenna array (110) are arranged orthogonally to each other and separate from each other; and
wherein the control unit (102) is configured to electrically steer a radiation pattern (136) of the transmitting antenna array (108) and/or the receiving antenna array (110).

## Description

The present invention relates to a bistatic antenna device.

Known scannable antenna arrays are physically large and electrically and/or computationally complex.

In addition, the known antenna arrays and devices require complex hardware components, e.g. such as complex switching matrices and/or expensive SDR/DSP based approaches. For example, there are devices in which the beamforming process is done in a digital domain with a MIMO array.

US 2010/0025467 A1 describes an antenna device using a fixed antenna array without beamforming.

In EP 3 403 580 B1 discloses a reader including a bistatic radio frequency switch matrix which is operable to establish a first antenna of a plurality of antennas as a transmit antenna. However, EP 3 403 580 B1 only describe a mixture of combinations of antenna array arrangements without beamforming.

The invention solves the problem of providing an antenna device with a simplified setup which is additionally able to overcome the disadvantages of the prior art

This problem is solved by a bistatic antenna device with the features of the independent claim. Further embodiments of the invention are laid out in the dependent claims.

The bistatic antenna device comprises a control unit. Preferably, the control unit is configured to control the antenna device.

Furthermore, the bistatic antenna device comprises a transmitter unit and a receiver unit. The transmitter unit is preferably configured to generate a transmitting signal. In one embodiment, the transmitter unit can receive information which can form the basis for the transmitting signal to be generated.

The receiver unit is preferably configured to receive the transmitted and/or a reflected signal. A "reflected signal" can be understood as - but is not limited to - a signal which is generally based on the transmitted generated signal but the signal was reflected and/or effected in a way that the signal - when it is received by the receiver unit - comprises at least one signal parameter which is different compared to the generated transmitting signal.

A "signal parameter" can be - but is not limited to - a phase and/or a frequency of the signal.

In addition, the bistatic antenna device comprises a transmitting antenna array and a receiving antenna array.

The transmitting antenna array is preferably configured to emit the generated transmitting signal of the transmitter unit.

The receiving antenna array is preferably configured to receive the transmitted and/or reflected signal. The receiving antenna array preferably can transfer the received signal to the receiver unit.

The transmitting antenna array and the receiving antenna array are arranged orthogonally to each other. According to a non-limiting example, the transmitting antenna can be arranged as a vertical antenna array and the receiving antenna array can be arranged as a horizontal antenna array.

In addition, the transmitting antenna array and the receiving antenna array are separate from each other. With view to the antenna arrays the term "separate" can be understood as that the two antenna arrays can be controlled separate from each other. This is an advantage over the prior art in which the antenna arrays (e.g. vertical and horizontal antenna arrays) are mostly controlled in combination only.

Furthermore, the control unit is configured to electrically steer a radiation pattern of the transmitting antenna array and/or the horizontal antenna array.

The advantage is that preferably the physical size and the complexity of the antenna device can be reduced compared to prior art devices by establishing the same quality of functionality by using separate antenna devices as well as an electrically steerable radiation pattern.

According to an embodiment of the invention, the bistatic antenna device is configured as a RFID reader. In particular the bistatic antenna device can be a UHF RFID reader.

Especially the orthogonally arrangement of the transmitting and receiving antennas are advantageous regarding the implementation in RFID readers.

In another embodiment, the control unit can be configured to perform a beamforming by using the transmitting antenna array and/or the receiving antenna array.

In particular, the control unit can be configured to perform a passive beamforming, by using the transmitting antenna array and/or the receiving antenna array.

Preferably, the antenna pattern, especially the radiation patter, "beam" of the transmitting antenna array can be scanned by the receiving antenna array. Referring back to the example mentioned above, the vertical "beam" can be scanned by the vertical antenna array wide on the horizontal side.

Inversely, the beam of the horizontal receiving antenna array can preferably be scanned in the horizontal space.

That is why the bistatic antenna device, especially the receiving antenna array or the receiver unit will "hear" the strongest responses from the location where the patterns of the transmitting antenna array and the receiving antenna array intersect.

As the beam in the antenna arrays can be electrically scanned, the location of the antenna device can preferably be easily changed. For example, the antenna device can be arranged on a vehicle, e.g. such as a fork lift, to localize goods in a warehouse, wherein the goods comprise a RFID tag.

According to an embodiment, the transmitter unit is electrically connected to the transmitting antenna array and/or to the receiving antenna array via a beamforming network.

According to another embodiment, the receiver unit is electrically connected to the transmitting antenna array and/or to the receiving antenna array via a beamforming network.

Preferably, the transmitter unit and the receiver unit can be connected to the transmitting antenna array and/or the receiving antenna array via the same beamforming network.

It can be advantageous, if the beamforming network comprises a switching device to select a desired beam.

That means that the beamforming network and especially the switching device of the beamforming network can be configured to pointing a beam in four dimensions from the boresight of the orthogonally arranged transmitting antenna array and the receiving antenna array.

In a further embodiment, the beamforming network can preferably comprise a Butler Matrix. In particular, the beamforming network can be a Butler Matrix.

More preferably, the switching device can be a Butler Matrix.

The term "Butler Matrix" refers to - but is not limited to - a beamforming network used to feed a phased array of antenna elements. In particular, its purpose is to control the direction of a beam, or beams, of radio transmission.

The use of a Butler Matrix is advantageous regarding the control of the radiation pattern of the transmitting antenna array and/or the receiving antenna array.

According to a preferred embodiment, the transmitting antenna array and the receiving antenna array comprise the same number of antenna elements.

For example, the transmitting antenna array and the receiving antenna array both comprise four antenna elements. With such an 4x4 array in combination with the orthogonally arrangement and the separate steering of the radiation pattern, the same quality and network parameters can be achieved as with a common known array of 16 antenna elements (8x8 array).

Furthermore, if an 8x8 array is considered, the benefits of the invention are even more evident. Only two sets of eight antenna elements (8x8 array) are required instead of 64 elements with a common antenna setup. In addition, only two 8x8 beamforming networks (e.g. Butler Matrices) are required instead of 16.

According to an alternative embodiment, the transmitting antenna array and the receiving antenna array comprise a different number of antenna elements.

As a non-limiting example, the transmitting antenna array can comprise four antenna elements and the receiving antenna array can comprise eight antenna elements. Such a setup advantageously increases the receiving resolution due to the higher number of antenna elements on the "receiving side".

However, it is also possible that, according to another embodiment, the transmitting antenna array comprises eight antenna elements and the receiving antenna array comprises only four antenna elements.

In general, all combinations of different quantities of antenna elements are possible, depending on the application of the bistatic antenna device and/or the requirements of the bistatic antenna device.

According to a further alternative embodiment, the receiver unit comprises at least one variable phase shifter. Alternatively, the receiver unit is realized by at least one variable phase shifter.

The variable phase shifter preferably can enhance the function and accuracy of the beamforming network.

In addition, due to the bistatic setup of the antenna device, the receiving antenna array preferably is not required to withstand the high-power transmitting signal. In an advantageous manner this allows to implement the at least one variable phase shifter to realize a more compact design of the bistatic antenna device. In addition, the beam pointing resolution is significantly increased.

With reference to the attached drawings, further details and advantages of the invention are described.
- Fig. 1: shows a schematic drawing of general parts of a bistatic antenna device according to the invention;
- Fig. 2: shows a schematic drawing of the bistatic antenna device according to Fig. 1 showing respective components in more detail; and
- Fig. 3: shows a schematic drawing of a beamforming radiation pattern generated by the bistatic antenna device according to the invention.

Identical or functionally equivalent elements are provided with the same reference signs in all figures.

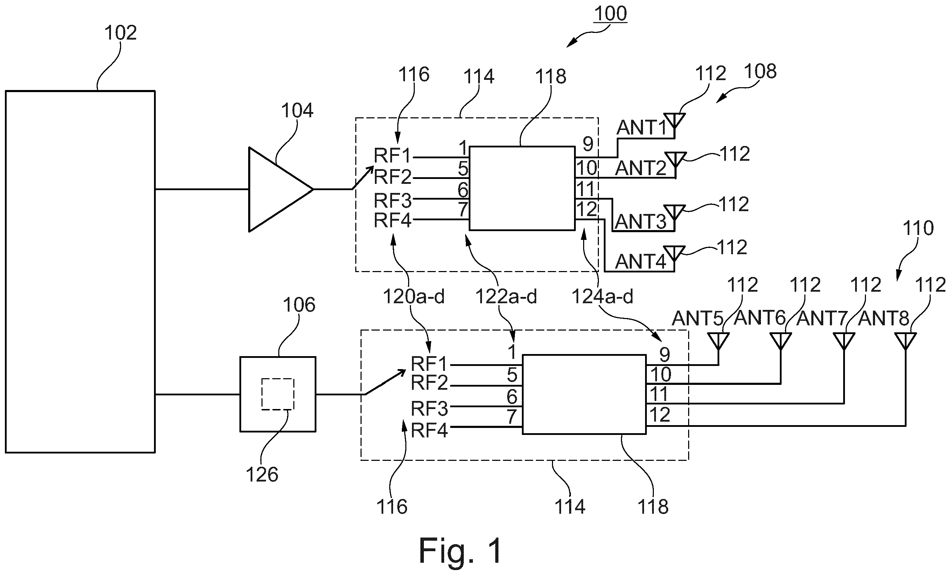

With reference to Fig. 1, a schematic drawing of a bistatic antenna device 100 according to the invention is described. The bistatic antenna device 100 is preferably configured as a RFID reader and especially as a UHF RFID reader.

The bistatic antenna device 100 (also "antenna device 100" in the following) comprises a control unit 102. In general, the control unit 102 is configured to control the antenna device 100.

Furthermore, the antenna device 100 comprises a transmitter unit 104 and a receiver unit 106.

The transmitter unit 104 and the receiver unit 106 are both electrically connected with the control unit 102.

In addition, the antenna device 100 comprises a transmitting antenna array 108 and a receiving antenna array 110. The transmitting antenna array 108 and the receiving antenna array 110 are arranged orthogonally to each other. In Fig. 1, the transmitting antenna array 108 is arranged vertically while the receiving antenna array 110 is arranged horizontally. However, the spatial arrangement of the antenna arrays 108, 110 can change as long as they are orthogonally to each other.

Moreover, the transmitting antenna array 108 and the receiving antenna array 110 are separate from each other. That means that the two antenna arrays 108, 110 can be controlled separate, especially independently, from each other.

In Fig. 1 each antenna array 108, 110 comprises four antenna elements 112. Alternatively, the number of antenna elements can differ. For example, the transmitting antenna array 108 can comprise four antenna elements 112 and the receiving antenna array 110 can comprise eight antenna elements 112 or vice versa.

Furthermore, the transmitter unit 104 is electrically connected to the transmitting antenna array 108 via a beamforming network 114. In this context, also the receiver unit 106 is electrically connected to the receiving antenna array 110 via another beamforming network 114.

Each beamforming network 114 comprises a switching device 116 to select a desired beam. The switching device 116 is realized as a 1:4 switching device, especially as a 1:4 RF switch.

In addition, each beamforming network 114 according to the embodiment of Fig. 1 comprises a Butler Matrix 118, especially a 4x4 Butler Matrix.

The switching device 114 comprises four output ports 120a-d, namely beam ports, wherein the output ports 120a-d are electrically connected to four input ports 122a-d of the Butler Matrix 118. Especially, one output port 120a-d of the switching device 116 is electrically connected to one input port 122a-d of the Butler Matrix 118.

Moreover, the Butler Matrix 118 comprises four antenna ports 124a-d. One antenna port 124a-d is electrically connected to one antenna element 112 of the respective antenna array 108, 110. Therefore, the number of antenna ports 124a-d preferably corresponds to the number of antenna elements 112 of the respective antenna array 108, 110.

The receiver unit 106 can comprise a variable phase shifter 126, which is represented as a dotted lined square in Fig. 1.

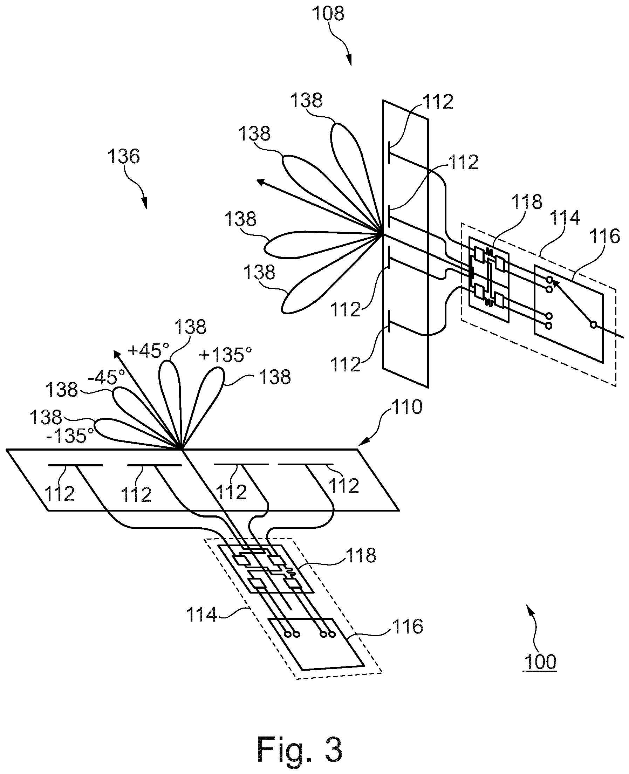

During operation, the antenna device 100, especially the control unit 102, generates a transmitting signal and provides the transmitting signal to the transmitter unit 104. In addition, the control unit 102 is configured to steer a radiation pattern 136 (see Fig. 3) of the transmitting antenna array 108 and/or the receiving antenna array 110.

The transmitting signal is then provided to one or more of the antenna elements 112 of the transmitting antenna array 108 via the beamforming network 114, especially via the switching device 116 and the Butler Matrix 118.

The transmitting signal preferably is a beamforming signal. That means that the antenna device 100 is configured to perform a beamforming, in particular a passive beamforming, especially by using the transmitting antenna array 108 and/or the receiving antenna array 110.

A reflected signal is received by one or more of the antenna elements 112 of the receiving antenna array 110. The received signal then gets provided to the receiver unit 106 via the beamforming network 114, especially via the Butler Matrix 118 and the switching device 116.

The receiver unit 106 transfers the received signal to the control unit 102. Based on the received signal a localization of a RFID tag can be performed.

Due to the separation and the orthogonally arrangement of the two antenna arrays 108, 110, the antenna device 100 is reduced in size while performing like a bigger antenna device 100 with more than the described number antenna elements 112.

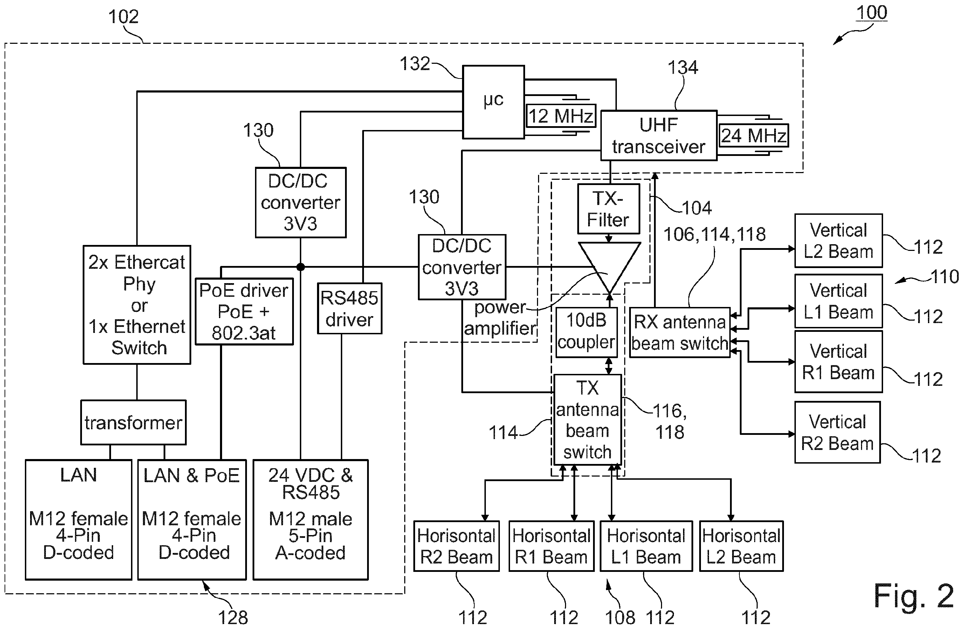

With view to Fig. 2, a more detailed schematic drawing of the antenna device 100 according to the invention is shown.

The general components correspond to the components as already described with regard to Fig. 1.

One difference is that the horizontally arranged antenna elements 112 belong to the transmitting antenna array 108 and the vertically arranged antenna elements 112 belong to the receiving antenna array 110. However, the antenna arrays 108, 110 are also arranged orthogonally to each other.

As can be taken from Fig. 2, the control unit 102 comprises several elements like input ports 128 to receive input signals or data.

Moreover, the control unit 102 comprises converters 130, especially DC/DC converters, as well as a microcontroller 132 to feed a transceiver 134, especially a UHF transceiver.

According to the embodiment of Fig. 2, the transceiver 134 is coupled to the transmitter unit 104 as well as to the receiver unit 106.

The transmitter unit 104 also comprises a TX filter e.g. to ensure that a clear signal is provided to the transmitting antenna array 108. In this context, the beamforming network 114 additionally comprises a coupler, especially a 10dB coupler.

According to the embodiment shown in Fig. 2, the switching device 116 and the Butler Matrix 118 of both beamforming networks 114 are preferably realized in one component. Regarding the "transmitting path", the switching device 116 and the Butler Matrix 118 are realized as an TX antenna beam switch. Regarding the "receiving path", the switching device 116 and the Butler Matrix 118 are realized as an RX antenna beam switch.

During operation and with view to the embodiment of Fig- 2, the transmitting signal is transferred from the UHF transceiver 134 to the TX filter and to the power amplifier of the transmitter unit 104. Then the transmitting signal is provided to the 10dB coupler and to the TX antenna beam switch 116, 118. After that, the transmitting signal is transferred to one or more of the antenna elements 112 of the transmitting antenna array 108.

The reflected signal is received by one or more of the antenna elements 112 of the receiving antenna array 110 and transferred via the RX antenna beam switch 106, 114, 118 to the transceiver 134 for further processing.

A more detailed view to the beamforming radiation pattern is explained with regard to Fig. 3.

Fig. 3 especially shows - in a perspective drawing - the orthogonally arrangement of the transmitting antenna array 108 and the receiving antenna array 110. Both antenna arrays 108, 110 also comprise - but are not limited to - four antenna elements 112.

In addition, the antenna device 100 comprises the aforementioned beamforming network 114 containing the switching device 116 and the Butler Matrix 118.

The transmitter unit 104 and the receiver unit 106 are not shown in Fig. 3 for the sake of an easier overview and as the focus should be directed to the beamforming aspect of the antenna arrays 108, 110.

As can be taken from Fig. 3, the antenna arrays 108, 110 are emitting a beamforming radiation pattern 136 with four beamforming clubs 138 for each antenna array 108, 110.

That means that the antenna device 100 and especially the Butler Matrix 118 allow to pointing the beam in four directions from the boresight of the respective antenna array 108, 110. In Fig. 3 these directions are -135°, -45°, +45° and +135°.

During operation and to localize a tag (not shown), the antenna device 100 will "hear" the strongest responses from the location where the radiation pattern 136 of the transmitting antenna array 108 and the radiation pattern 136 of the receiving antenna array 110 will intersect.

### Reference signs

- 100: bistatic antenna device
- 102: control unit
- 104: transmitter unit
- 106: receiver unit
- 108: transmitting antenna array
- 110: receiving antenna array
- 112: antenna elements
- 114: beamforming network
- 116: switching device
- 118: Butler Matrix
- 120a-d: output ports of the switching device
- 122a-d: input ports of the Butler Matrix
- 124a-d: antenna ports of the Butler Matrix
- 126: variable phase shifter
- 128: input ports of the control unit
- 130: converter
- 132: microcontroller
- 134: transceiver
- 136: radiation pattern
- 138: beamforming club

## Claims

1. Bistatic antenna device (100), comprising:
- a control unit (102);
- a transmitter unit (104);
- a receiver unit (106);
- a transmitting antenna array (108); and
- a receiving antenna array (110);
wherein the transmitting antenna array (108) and the receiving antenna array (110) are arranged orthogonally to each other and separate from each other; and wherein the control unit (102) is configured to electrically steer a radiation pattern (136) of the transmitting antenna array (108) and/or the receiving antenna array (110).

2. Bistatic antenna device (100) according to claim 1, configured as a RFID reader, in particular as a UHF RFID reader.

3. Bistatic antenna device (100) according to claim 1 or 2, **characterized in that** the control unit (102) is configured to perform a beamforming, in particular a passive beamforming, by using the transmitting antenna array (108) and/or the receiving antenna array (110).

4. Bistatic antenna device (100) according to one of the preceding claims, **characterized in that** the transmitter unit (104) is electrically connected to the transmitting antenna array (108) and/or to the receiving antenna array (110) via a beamforming network (114).

5. Bistatic antenna device (100) according to one of the preceding claims, **characterized in that** the receiver unit (106) is electrically connected to the transmitting antenna array (108) and/or to the receiving antenna array (110) via a beamforming network (114).

6. Bistatic antenna device (100) according to claim 4 or 5, **characterized in that** the beamforming network (114) comprises a switching device (116) to select a desired beam.

7. Bistatic antenna device (100) according to claim 5, wherein the beamforming network (114) comprises a Butler Matrix (118), in particular wherein the beamforming network (114) is a Butler Matrix (118).

8. Bistatic antenna device (100) according to one of the preceding claims, **characterized in that** the transmitting antenna array (108) and the receiving antenna array (110) comprise the same number of antenna elements (112).

9. Bistatic antenna device (100) according to one of claims 1 to 7, **characterized in that** the transmitting antenna array (108) and the receiving antenna array (110) comprise a different number of antenna elements (112).

10. Bistatic antenna device (100) according to one of the preceding claims, **characterized in that** the receiver unit (106) comprises at least one variable phase shifter (126) or is realized by at least one variable phase shifter (126).
